# EUROPEAN PATENT APPLICATION

(11) **EP 1 833 148 A1**
(43) Date of publication of application: **12.09.2007**
(21) Application number: 06004591.1
(22) Date of filing: 07.03.2006
(51) Int. Cl.: H02K 21/12, H02K 1/06, H02K 1/12, H02K 29/00

(54) **Brushless DC motors and systems using the same**

(71) Applicant: Chen, Jian-Yeu, Shin-Chu City (TW)
(72) Inventor: Chen, Jian-Yeu, Shin-Chu City (TW)
(74) Representative: Marchand, André

(57) **Abstract**

A system comprising a brushless DC motor is disclosed. The system may include a rotor assembly and a stator assembly. The rotor assembly may include: a first permanent magnet having a first ring shape and generating a first magnetic field; a rotor shaft coupled to the first permanent magnet; and a first magnetic ring coupled to the first permanent magnet. The stator assembly is rotatably coupled to the rotor assembly and may include: a magnetic, ring-shaped or partially ring-shaped winding base; coils winding upon the winding base; and a plurality of magnetic protrusions extending from the winding base toward the first magnet ring. Specifically, each of the magnetic protrusions may be spaced apart from other magnetic protrusions, and a section of the first permanent magnet, a section of the first magnetic ring, a section of the winding base, and one of the magnetic protrusions may provide a pseudo path for magnetic field lines.

## Description

The invention generally relates to DC motors and systems containing DC motors. More particularly, the invention relates to brushless DC motors and systems containing brushless DC motors.

Electric Motors have been in existence for decades or, in some examples, for more than a century. An electric motor relies on the magnetic force generated as a result of an electrical current to drive the relative action between a rotor, which usually is a rotating element, and a stator, which usually is a non-rotating element, during the operation of the motor. In other words, a motor may convert electrical energy supplied to the stator to mechanical force that drives an element or a device coupled to the motor. Using the same or a similar structure and mechanism, a generator may be constructed to convert mechanical force back to electrical energy.

Electric Motors may be categorized into two major categories, DC (direct current) and AC (alternate current). To avoid tangling the wires for conducting an electrical current as a rotator moves, DC motors may rely on a pair of brushes from the stator and one or more pairs of receptors from the rotor to provide an electrical current to a rotating rotor. However, due to the need for conductive brushes, a DC motor, depending on its design, may suffer from certain disadvantages, such as static, noise, vibration, the wear of brushes or other conductive elements, undesirable generation of heat and sparks, lack of electrical or mechanical efficiency, the limitation on its speed, dead angles in motor operation, hysteresis loss, torque ripple, and cogging.

In contrast to DC motors, AC motors do not require brushes and receptors. However, AC motors may require a phase changing circuit and other related circuits to control the torque, speed, or both, of the motor. In some applications, the need for those circuits may increase the cost and the size of an AC motor system and make it an unpopular or infeasible choice. Depending on its design, an AC motor may also suffer from certain disadvantages, such as the need for an associated motor-driving or motor-control circuitry, noise, vibration, undesirable generation of heat, lack of electrical or mechanical efficiency, the limitation on its speed, dead angles in its operation, hysteresis loss, torque ripple, or cogging.

Accordingly, there is a need for improved electrical motors and systems to overcome disadvantages of traditional motors, There is also a need for systems using alternative motor design or alternative driving elements.

The present invention relates to a system comprising a brushless DC motor, the brushless DC comprising a rotor assembly and a stator assembly, the rotor assembly comprising a first permanent magnet having a first ring shape or a portion of it and generating a first magnetic field, a rotor shaft coaxial with and coupled to the first permanent magnet, and a first magnetic ring coaxial with and coupled to the first permanent magnet, the stator assembly being coaxial with and rotatably coupled to the rotor assembly and comprising a magnetic, ring-shaped or partially ring-shaped winding base, coils winding upon the winding base, and a plurality of magnetic protrusions extending from the winding base toward the first magnet ring, each of the magnetic protrusions being spaced apart from other magnetic protrusions, and wherein a section of the first permanent magnet, a section of the winding base, one of the magnetic protrusions, and a section of the first magnetic ring provide a pseudo path for magnetic field lines.

According to one embodiment, the pseudo path for magnetic field lines is a looped pseudo path and an interaction between a current from the coils and the first magnetic field generates a torque to drive the rotor assembly.

According to one embodiment, the coils are connected in series and are wound spirally along the winding base, the coils having a plurality of groups spaced apart in a circumferential direction and each group being located between two magnetic protrusions of the plurality of magnetic protrusions.

According to one embodiment, the first magnetic ring, the plurality of magnetic protrusions, and the winding base each comprises at least one of a ferrite, a ferromagnetic, or a soft magnetic material.

According to one embodiment, the stator assembly is rotatably coupled to the rotor assembly with a first gap between the first permanent magnet and the winding base and a second gap between the magnetic protrusions and the first magnetic ring.

According to one embodiment, the system further comprises a power supply module coupled to the stator assembly and is adapted to provide a DC voltage to the motor.

According to one embodiment, a polarity of the first magnetic field generated by the first permanent magnet extends substantially in one of a radial direction or an axial direction of the first ring shape.

According to one embodiment, the first permanent magnet is coupled to an inner rim of the first magnetic ring; an outer rim of the winding base faces an inner rim of the first permanent magnet with a first gap in between; the plurality of magnetic protrusions extend from the winding base in a radial direction, the plurality of magnetic protrusions being spaced apart in a circumferential direction; and at least a portion of one of the plurality of magnetic protrusions faces a planar side of the first magnetic ring with a second gap in between.

According to one embodiment, the rotor assembly further comprises a second magnetic ring coupled to the rotor shaft, the second magnetic ring being smaller than the first magnetic ring and coaxial to the first magnetic ring; and a second permanent magnet coupled to the second magnetic ring, the second permanent magnet having a second ring shape or a portion of the second ring shape and generating a second magnetic field, the second permanent magnet being coupled to an outer rim of the second magnetic ring; the winding base is located between the first permanent magnet and the second permanent magnet; an inner rim of the winding base faces an outer rim of the second permanent magnet with a third gap in between; the plurality of magnetic protrusions extend from the winding base in both radial and counter-radial directions; and at least a portion of one of the plurality of magnetic protrusions faces a planar side of the second magnetic ring with a fourth gap in between.

According to one embodiment, the first permanent magnet is coupled to a planar side of the first magnetic ring; a planar side of the winding base faces a planar side of the first permanent magnet with a first gap in between; the plurality of magnetic protrusions extend from the winding base in a direction parallel to an axial direction of the rotor shaft, the plurality of magnetic protrusions being spaced apart in a circumferential direction; and at least a tip of one of the plurality of magnetic protrusions faces the planar side of the first magnetic ring with a second gap in between.

According to one embodiment, the first permanent magnet is coupled to a planar side of the first magnetic ring; a first planar side of the winding base faces a planar side of the first permanent magnet with a first gap in between; the plurality of magnetic protrusions extend from the winding base in a direction parallel to an axial direction of the rotor shaft, the plurality protrusions being spaced apart in a circumferential direction; and at least a portion of one of the plurality of magnetic protrusions extending outwardly from the first planar side of the winding base faces the outer rim of the first magnetic ring with a second gap in between.

According to one embodiment, the rotor assembly further comprises a second permanent magnet coupled to the rotor shaft, the second permanent magnet having a second ring shape or a portion of the second ring shape and generating a second magnetic field, the second permanent magnet being coaxial to the first permanent magnet, and a second magnetic ring coupled to the second permanent magnet, the second magnetic ring being coupled to a planar side of the second permanent magnet; the winding base is located between the first permanent magnet and the second permanent magnet; a second planar side of the winding base faces a planar side of the second permanent magnet with a third gap in between; the plurality of magnetic protrusions extend bi-directionally from the winding base in parallel with the axial direction of the rotor shaft; and at least a portion of one of the plurality of magnetic protrusions extending outwardly from the second planar side of the winding base faces the outer rim of the second magnetic ring with a fourth gap in between.

The present invention also relates to an electro-magnetic device for converting electrical energy to mechanical energy or converting mechanical energy to electrical energy, characterised in that it comprises a rotor assembly comprising a first permanent magnet having a first ring shape and generating a first magnetic field, a rotor shaft coupled to the first permanent magnet, and a first magnetic ring coupled to the first permanent magnet; and a stator assembly rotatably coupled to the rotor assembly, the stator assembly comprising a magnetic, ring-shaped or partially ring-shaped winding base, coils winding upon the winding base, and a plurality of magnetic protrusions extending from the winding base toward the first magnet ring; and wherein a section of the first permanent magnet, a section of the winding base, one of the magnetic protrusions, and a section of the first magnetic ring provide a pseudo path for magnetic field lines.

According to one embodiment, the coils are connected in series and are wound spirally along the winding base, the coils having a plurality of groups spaced apart in a circumferential direction and each group being located between two magnetic protrusions of the plurality of magnetic protrusions.

According to one embodiment, a polarity of the first magnetic field generated by the first permanent magnet extends substantially in one of a radial direction or an axial direction of the first ring shape.

According to one embodiment, the first permanent magnet is coupled to an inner rim of the first magnetic ring; an outer rim of the winding base faces an inner rim of the first permanent magnet with a first gap in between; the plurality of magnetic protrusions extend from the winding base in a radial direction, the plurality of magnetic protrusions being spaced apart in a circumferential direction; and at least a portion of one of the plurality of magnetic protrusions faces a planar side of the first magnetic ring with a second gap in between.

According to one embodiment, the rotor assembly further comprises a second magnetic ring coupled to the rotor shaft, the second magnetic ring being smaller than the first magnetic ring and coaxial to the first magnetic ring; and a second permanent magnet coupled to the second magnetic ring, the second permanent magnet having a second ring shape or a portion of the second ring shape and generating a second magnetic field, the second permanent magnet being coupled to an outer rim of the second magnetic ring; the winding base is located between the first permanent magnet and the second permanent magnet; an inner rim of the winding base faces an outer rim of the second permanent magnet with a third gap in between; the plurality of magnetic protrusions extend from the winding base in both radial and counter-radial directions; and at least a portion of one of the plurality of magnetic protrusions faces a planar side of the second magnetic ring with a fourth gap in between.

According to one embodiment the first permanent magnet is coupled to a planar side of the first magnetic ring; a planar side of the winding base faces a planar side of the first permanent magnet with a first gap in between; the plurality of magnetic protrusions extend from the winding base in a direction parallel to an axis of the rotor shaft, the plurality of magnetic protrusions being spaced apart in a circumferential direction; and at least a portion of one of the plurality of magnetic protrusions faces the planar side of the first magnetic ring with a second gap in between.

According to one embodiment, the first permanent magnet is coupled to a planar side of the first magnetic ring; a first planar side of the winding base faces a planar side of the first permanent magnet with a first gap in between; the plurality of magnetic protrusions extend from the winding base in a direction parallel to an axial direction of the rotor shaft, the plurality protrusions being spaced apart in a circumferential direction; and at least a portion of one of the plurality of magnetic protrusions extending outwardly from the first planar side of the winding base faces the outer rim of the first magnetic ring with a second gap in between.

According to one embodiment, the rotor assembly further comprises a second permanent magnet coupled to the rotor shaft, the second permanent magnet having a second ring shape or a portion of the second ring shape and generating a second magnetic field, the second permanent magnet being coaxial to the first permanent magnet; and a second magnetic ring coupled to the second permanent magnet, the second magnetic ring is coupled to a planar side of the second permanent magnet; and the winding base is located between the first permanent magnet and the second permanent magnet; a second planar side of the winding base faces a planar side of the second permanent magnet with a third gap in between; the plurality of magnetic protrusions extend bi-directionally from the winding base in parallel with the axial direction of the rotor shaft; and at least a portion of one of the plurality of magnetic protrusions extending outwardly from the second planar side of the winding base faces the outer rim of the second magnetic ring with a fourth gap in between.

The present invention also relates to a computer peripheral device having a brushless DC motor comprising and electro-magnetic device according to the invention.

According to one embodiment, the computer peripheral device comprise at least one of a hard drive, an optical drive, a magnetic drive, a tape drive, a printer, a scanner, a copying machine, a camera, and a video camera.

The foregoing summary, as well as the following detailed description of examples of the invention, will be better understood when read in conjunction with the appended drawings. For the purpose of illustrating the invention, the drawings provide illustrative examples. It should be understood, however, that the invention is not limited to the precise arrangements and instrumentalities shown. In the drawings:
Fig. 1 illustrates a cross-sectional view of an example of a brushless DC motor consistent with the invention.
Fig. 2 illustrates a cross-sectional view of a portion of the motor illustrated in Fig. 1.
Fig. 3 illustrates a perspective view of the stator assembly illustrated in Figs. 1 and 2.
Fig. 4 illustrates a perspective view of some exemplary components of a brushless DC motor in one example consistent with the invention.
Fig. 5 illustrates a cross-sectional view of a brushless DC motor consistent with the invention.
Fig. 6 illustrates a cross-sectional view of a portion of the motor illustrated in Fig. 5.
Fig. 7 illustrates a perspective view of the stator assembly illustrated in Figs. 5 and 6.
Fig. 8 illustrates a perspective view of some exemplary components of a brushless DC motor in one example consistent with the invention.
Fig. 9 illustrates a cross-sectional view of a brushless DC motor consistent with the invention.
Fig. 10 illustrates a cross-sectional view of a portion of the motor illustrated in Fig. 9.
Fig. 11 illustrates a perspective view of the stator assembly illustrated in Figs. 9 and 10.
Fig. 12 illustrates a perspective view of some exemplary components of a brushless DC motor in one example consistent with the invention.
Fig. 13 illustrates a cross-sectional view of a brushless DC motor consistent with the invention.
Fig. 14 illustrates a cross-sectional view of a portion of the motor illustrated in Fig. 13.
Fig. 15 illustrates a perspective view of a rotor assembly illustrated in Figs. 13 and 14.
Fig. 16 illustrates a perspective view of some exemplary components of a brushless DC motor in one example consistent with the invention.
Fig. 17 illustrates a perspective view of an alternative, exemplary configuration of a winding base with an opening in the ring-shaped base in one example consistent with the invention.
Fig. 18 illustrates a cross-sectional view of an example of a vibration motor in one example consistent with the invention.
Fig. 19 illustrates an example of a rotor assembly having a partially ring shape in one example consistent with the invention.
Fig. 20 illustrates a perspective view of a stator assembly that may be used in the motor illustrated in Fig. 18.
Fig. 21 illustrates a perspective view of some exemplary components of the motor illustrated in Fig. 18.

Reference will now be made to embodiments of the invention, examples of which are illustrated in the accompanying drawings.

Examples consistent with the invention may include systems having brushless DC motors such as optical or magnetic drives, hard drives, other storage and computer peripheral devices, cameras, video cameras, servo systems, or vibration mechanisms. The motors may be designed to formed two or more gaps that are between a rotor assembly and a stator assembly. The gaps can be ring-shaped gaps that may intersect with one or more magnetic fields. In some examples, the brushless DC motors may rely on a stator assembly with winding design and magnetic protrusions to provide one or more looped "pseudo" paths for magnetic field lines to drive a rotor assembly. As a result, phase change in the electrical current driving the motors and associated control circuit may become unnecessary. Motors and systems illustrated in the examples below therefore may avoid and reduce one or more of the problems with traditional motors and may improve efficiency, reduce noise, and work with very low rotational speeds.

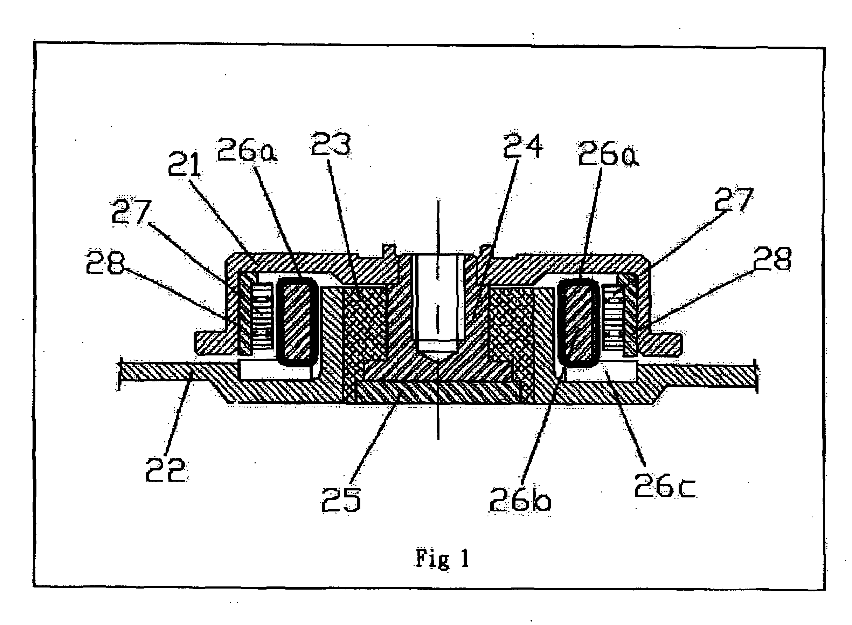

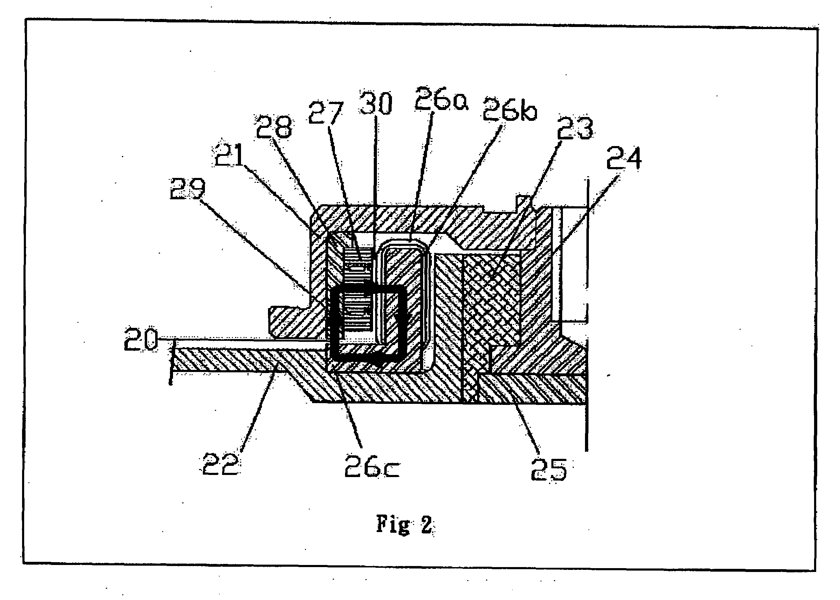

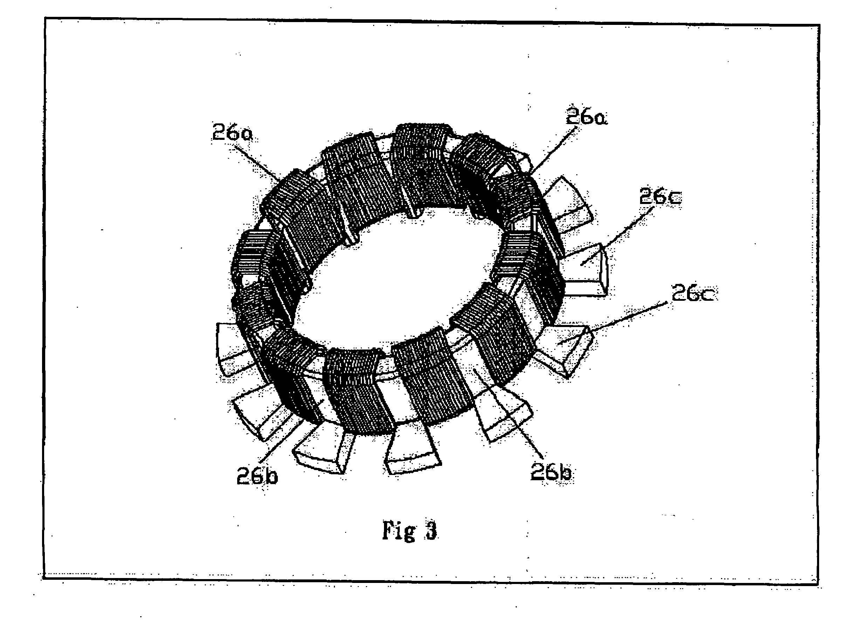

Fig. 1 illustrates a cross-sectional view of an example of a brushless DC motor. Fig. 2 illustrates a cross-sectional view of a portion of the motor illustrated in Fig. 1. Referring to Figs. 1 and 2, a brushless DC motor may include several elements, such as a rotor assembly and a stator assembly. The rotor assembly may include a first permanent magnet 27, a rotor shaft 24 coaxial with and coupled to the first permanent magnet 27, and a first magnetic ring 28 also coaxial with and coupled to the first permanent magnet 27. The first permanent magnet 27 may have a ring shape and generate a first magnetic field. Depending on the design, the rotor assembly may also include rotor hub 21 coupled to one or more parts of the rotor assembly. The stator assembly is rotatably coupled with the rotor assembly, thereby allowing a relative movement or rotation between the two. Fig. 3 illustrates a perspective view of the rotor assembly illustrated in Figs. 1 and 2. Referring to Figs. 2 and 3, the stator assembly may include a magnetic, ring-shaped winding base 26b, coils 26a winding upon the winding base, and a number of magnetic protrusions 26c extending from the winding base 26b toward the first magnet ring 28. Each of the protrusions 26c may be spaced apart from other protrusions. Referring to Figs. 1 and 2, depending on the design, the stator assembly may have one or more of a base 22, a cylindrical sleeve 23, and a sealing cap 25, each of which may be coupled to or rotatably coupled to one or more parts of the stator assembly.

Referring to Fig. 2, in some examples, a section of the first permanent magnet 27, a section of the winding base 26b, one of the magnetic protrusions26c, and a section of the first magnetic ring 28 may provide a "pseudo" path for magnetic field lines, which may follow the direction shown by the arrowed loop 29 shown in Fig. 2. Additional pseudo paths for magnetic field may be formed similarly for each of the protrusions 46c. Generally, a path for magnetic fields lines may be regarded as "pseudo" because those lines are imaginary and are provided to represent or visualize the direction or flow of magnetic field. In one example, the interaction between a current from the coils 26a and the first magnetic field generated by the first permanent magnet 27 may generate a torque to drive the rotor assembly, thereby rotating it relatively to the stator assembly.

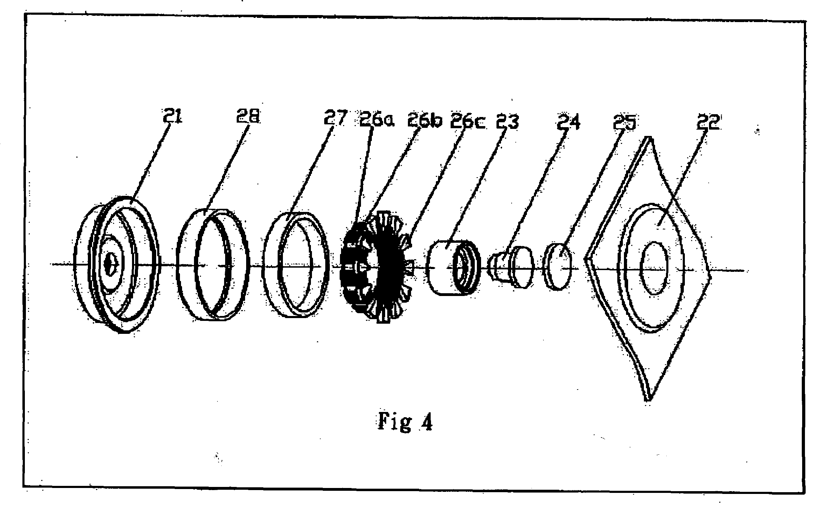

Fig. 4 illustrates a perspective view of some exemplary components of a brushless DC motor in one example. Referring to Figs. 3 and 4, in one example, the coils may be connected in series and be wound spirally along the ring-shaped or partially ring-shaped winding base 26b. In other words, the ring-shaped base 26b may be provided with an opening for ease of winding for other design or manufacturing considerations. As an example, the coils may have a plurality of groups, such as 12 coil groups shown in the illustrated example, which may be spaced apart in a circumferential direction with each coil group being located between two neighboring protrusions 26c. As illustrated, the stator assembly may have 12 protrusions intersecting with, or protruding from, the spaces between neighboring coil groups. In one example, the first magnetic ring 28, the protrusions 26d, and the winding base 26b each may include a material such as a ferrite, a ferromagnetic, a soft magnetic material, or a combination of two or more of them, to provide certain magnetic characteristics.

Referring to Fig. 1, the stator assembly may be rotatably coupled to the rotor assembly with one or more gaps or air gaps between the two. For example, Fig. 2 illustrates a first gap or air gap 30, which may have a ring-shape, between the first permanent magnet 27 (or at least a section of it) and the winding base 26b (or at least a section of it). Fig. 2 also illustrates a second gap or air gap 20 between each of the protrusions 26c and a nearby section of the first magnetic ring 28, which can be a section substantially corresponding to where the protrusion is. In one example, to provide the looped pseudo path for magnetic field line as indicated in Fig. 2, the polarity of the magnetic field generated by the first permanent magnet 27 may extend substantially in a radial direction of the ring-shaped permanent magnet 27.

In some examples, the physical structure of some parts of the rotor assembly, the stator assembly, or both may be designed in various manners depending on the application of a motor. As an example, referring to Figs. 1 and 2, the first permanent magnet 27 may be coupled to the inner rim of the first magnetic ring 28. Also, the outer rim of the winding base 26b may face the inner rim of the first permanent magnet 27 with a gap or an air gap 30 in between. Furthermore, as illustrated in Fig. 3, the protrusions 26c may extend from the winding base 26b in a radial direction, and the protrusions 26c may be spaced apart in a circumferential direction. Referring to Figs. 1 and 2, at least a portion of one of the protrusions 26c may face one planar side of the first magnetic ring 28 with a gap or an air gap 20 in between.

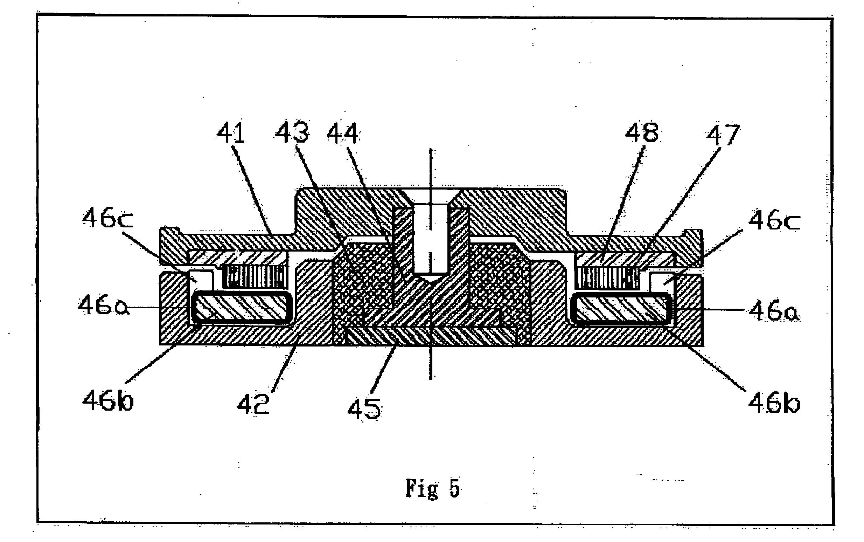

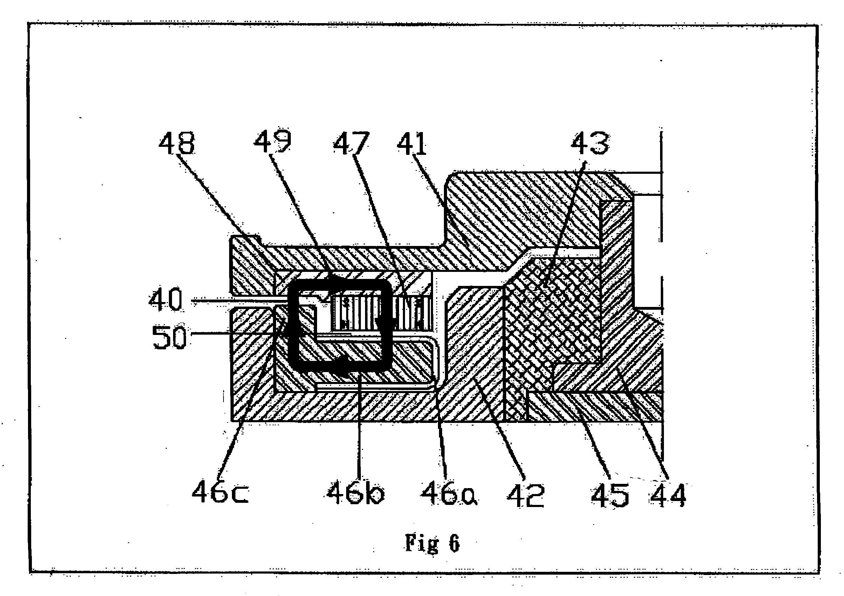

Figs. 5-8 illustrate another exemplary design of a brushless DC motor. Fig. 5 illustrates a cross-sectional view of a brushless DC motor. Fig. 6 illustrates a cross-sectional view of a portion of the motor illustrated in Fig. 5. Referring to Figs. 5 and 6, a brushless DC motor may include several elements, such as a rotor assembly and a stator assembly. The rotor assembly may include a first permanent magnet 47, a rotor shaft 44 coaxial with and coupled to the first permanent magnet 47, and a first magnetic ring 48 also coupled to the first permanent magnet 47. The first permanent magnet 47 may have a ring shape and generate a first magnetic field. Depending on the design, the rotor assembly may also include a rotor hub 41.

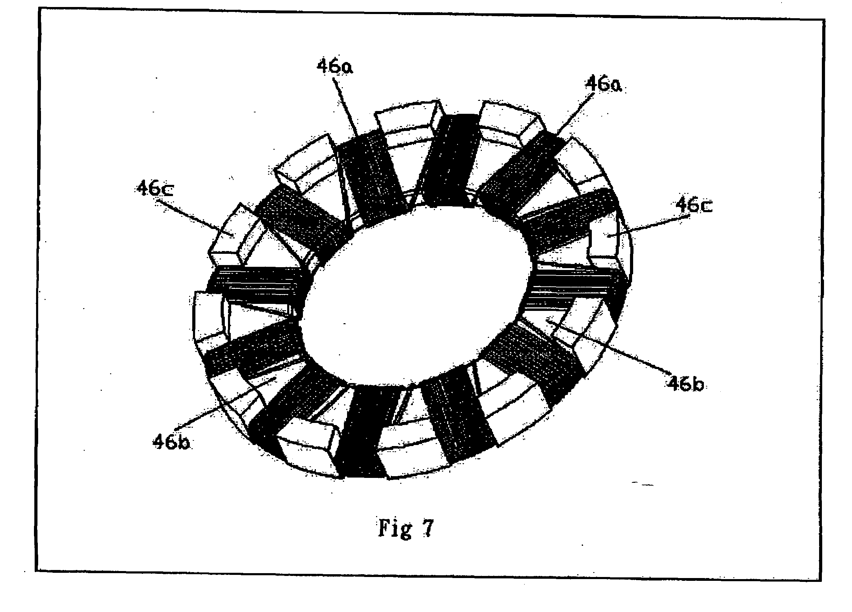

The stator assembly is rotatably coupled with the rotor assembly, thereby allowing a relative movement or rotation between the two. Fig. 7 illustrates a perspective view of the rotor assembly illustrated in Figs. 5 and 6. Referring to Figs. 6 and 7, the stator assembly may include a magnetic, ring-shaped or partially ring-shaped winding base 46b, coils 46a winding upon the winding base 46b, and a number of magnetic protrusions 46c extending from the winding base 46c toward the first magnetic ring 48. Each of the protrusions may be spaced apart from others. Depending on the design, the stator assembly may have one or more of a base 42, a cylindrical sleeve 43, and a sealing cap 45, each of which may be coupled or rotatably coupled to one or more parts of the stator assembly.

Referring to Fig. 6, in some examples, a section of the first permanent magnet 48, a section of the winding base 46b, one of the magnetic protrusions 46c, and a section of the first magnetic ring 47 may provide a pseudo path for magnetic field lines, which may follow the direction shown by the arrowed loop 49 shown in Fig. 6. Additional pseudo paths for magnetic field may be formed similarly for each of the protrusions 46c. As an example, the interaction between a current from the coils 46a and the first magnetic field generated by the first permanent magnet 47 may generate a torque to drive the rotor assembly, thereby rotating it relatively to the stator assembly.

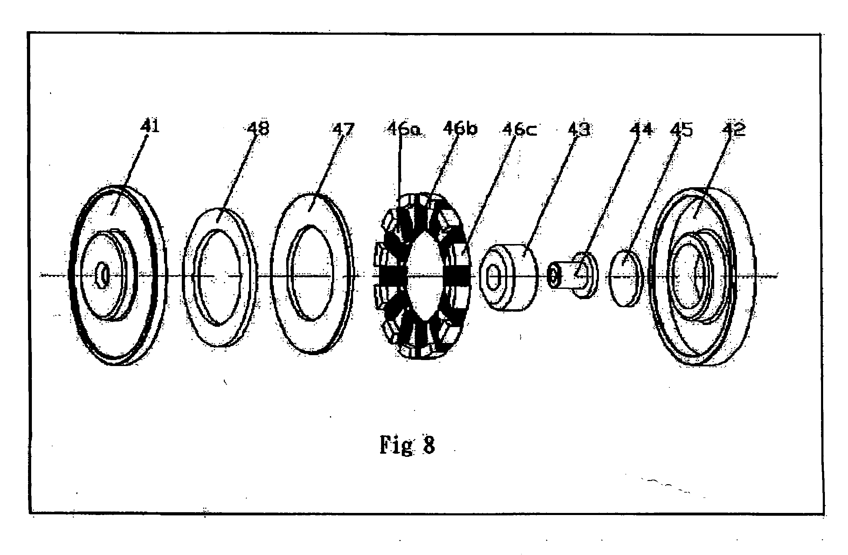

Fig. 8 illustrates a perspective view of some exemplary components of a brushless DC motor in one example. Referring to Figs. 7 and 8, in one example, the coils may be connected in series and be wound spirally along the ring-shaped or partially ring-shaped winding base 46b. As an example, the coils may have a plurality of groups, such as 12 coil groups shown in the illustrated example, which may be spaced apart in a circumferential direction with each coil group being located between two neighboring protrusions 46c. As illustrated, the stator assembly may have 12 protrusions intersecting with, or protruding from, the spaces between neighboring coil groups. In one example, the first magnetic ring 48, the protrusions 46c, and the winding base 46b each may include a material such as a ferrite, a ferromagnetic, a soft magnetic material, or a combination of two or more of them, to provide certain magnetic characteristics.

Referring to Fig. 5, the stator assembly may be rotatably coupled to the rotor assembly with one or more gaps or air gaps between the two. For example, Fig. 6 illustrates a first gap or air gap 50, which may have a ring shape, between the permanent magnet 47 (or at least a section of it) and the winding base 46b (or at least a section of it). Fig. 5 also illustrates a second gap or air gap 40 between each of the protrusions 46c and a nearby section of the first magnetic ring 48, which can be a section substantially corresponding to where the protrusion is. In one example, to provide the looped pseudo path for magnetic field line as indicated in Fig. 6, the polarity of the magnetic field generated by the first permanent magnet 47 may extend substantially in an axial direction of the ring-shaped permanent magnet 47.

In some examples, the physical structure of some parts of the rotor assembly, the stator assembly, or both may be designed in various manners depending on the application of a motor. As one example, referring to Figs. 5 and 6, the first permanent magnet 47 may be coupled to a planar side the first magnetic ring 48. A planar side of the winding base 46b may face a planar side of the first permanent magnet 47 with a first gap or air gap 50 in between. Referring to Fig. 7, the protrusions 46c may extend from the winding base 46b in a direction parallel to an axis of the rotor shaft 44. And the protrusions 46c may be spaced apart in a circumferential direction, as illustrated in Fig. 7. Referring to Fig. 6, at least a portion of one or more of the protrusions 46c may face a planar side of the first magnetic ring 48 with a second gap or air gap 40 in between.

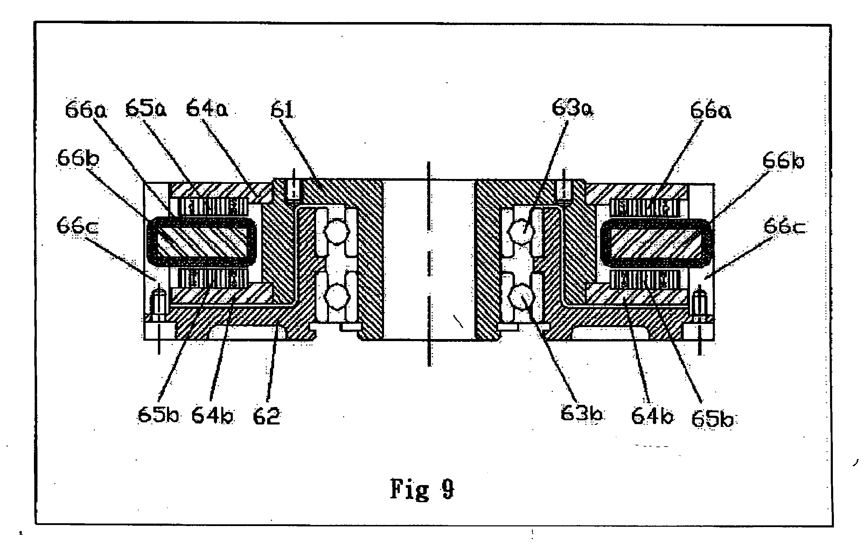

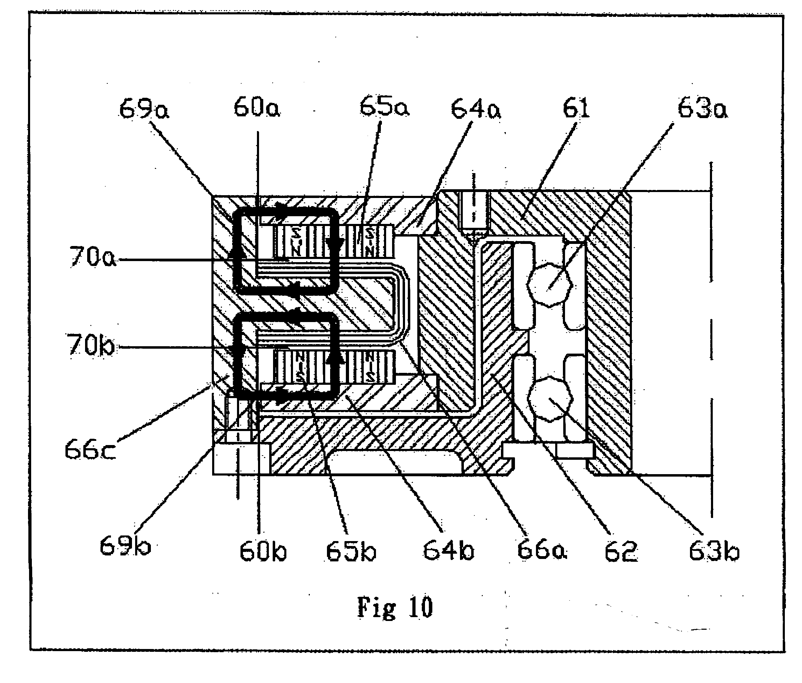

Figs. 9-12 illustrate another exemplary design of a brushless DC motor, which may be considered as a modification or expansion of the example illustrated in Figs. 5-8 to include an additional set of permanent magnet and magnetic ring for the rotor assembly with additional magnetic protrusions from the stator assembly. Fig. 9 illustrates a cross-sectional view of a brushless DC motor. Fig. 10 illustrates a cross-sectional view of a portion of the motor illustrated in Fig. 9. Referring to Figs. 9 and 10, a brushless DC motor may include several elements, such as a rotor assembly and a stator assembly. The rotor assembly may include a first permanent magnet 65a, a rotor shaft 61 coaxial with and coupled to the first permanent magnet 65a, and a first magnetic ring 64a also coaxial with and coupled to the first permanent magnet 65a. The first permanent magnet 65a may have a ring shape and generate a first magnetic field. Depending on the design, the rotor assembly may also include a rotor hub that is a part of the rotor shaft 61.

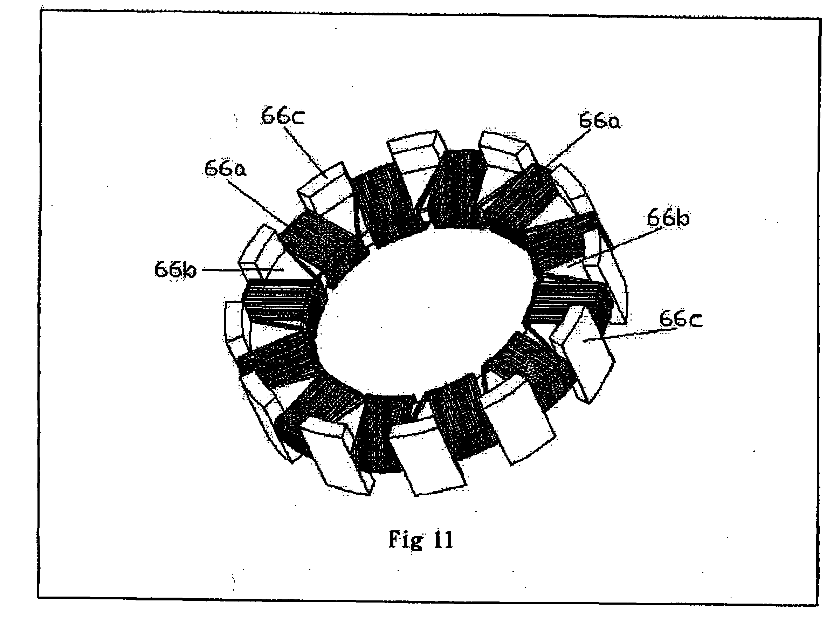

The stator assembly is rotatably coupled with the rotor assembly, thereby allowing a relative movement or rotation between the two. Referring to Figs. 10 and 11, the stator assembly may include a magnetic, ring-shaped or partially ring-shaped winding base 66b, coils 66a winding upon the winding base 66b, and a number of magnetic protrusions 66c extending from the winding base 66c toward the first magnetic ring 64a. Each of the protrusions may be spaced apart from others. Depending on the design, the stator assembly may have one or more of a base 62 and bearings 63a and 63ba, each of which may be coupled or rotatably coupled to one or more parts of the stator assembly.

Referring to Fig. 9, in some examples, a section of the first permanent magnet 65a, a section of the winding base 66b, one of the magnetic protrusions 66c, and a section of the first magnetic ring 64a may provide a pseudo path for magnetic field lines, which may follow the direction shown by the upper arrowed loop 69a shown in Fig. 10. As an example, an interaction between a current from the coils 66a and the first magnetic field generated by the first permanent magnet 65a may generate a torque to drive the rotor assembly, thereby rotating it relatively to the stator assembly.

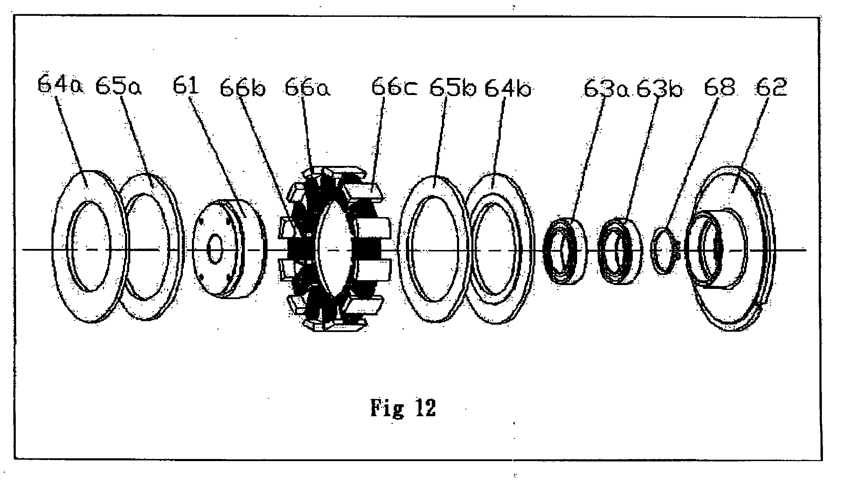

Fig. 12 illustrates a perspective view of some exemplary components of a brushless DC motor in one example. Referring to Figs. 11 and 12, in one example, the coils may be connected in series and be wound spirally along the ring-shaped or partially ring-shaped winding base 66b. As an example, the coils may have a plurality of groups, such as 12 coil groups shown in the illustrated example, which may be spaced apart in a circumferential direction with each coil group being located between two neighboring protrusions 66c. As illustrated, the stator assembly may have 12 protrusions intersecting with, or protruding from, the spaces between neighboring coil groups. In one example, the first magnetic ring 64a, the protrusions 66c, and the winding base 66b each may include a material such as a ferrite, a ferromagnetic, a soft magnetic material, or a combination of two or more of them, to provide certain magnetic characteristics.

Referring to Fig. 9, the stator assembly may be rotatably coupled to the rotor assembly with one or more gaps or air gaps between the two. For example, Fig. 10 illustrates a first gap or air gap 70a, which may have a ring shape, between the permanent magnet 65a (or at least a section of it) and the winding base 66b (or at least a section of it). Fig. 5 also illustrates a second gap or air gap 60a between each of the protrusions 66c and a section of the first magnetic ring 64a, which can be a section substantially corresponding to where the protrusion is. In one example, to provide the looped pseudo path for magnetic field line as indicated in Fig. 10, the polarity of the magnetic field generated by the first permanent magnet 65a may extend substantially in an axial direction of the ring-shaped permanent magnet 65a.

In some examples, the physical structure of some parts of the rotor assembly, the stator assembly, or both may be designed in various manners depending on the application of a motor. As one example, referring to Figs. 9 and 10, the first permanent magnet 65a may be coupled to a planar side the first magnetic ring 64a. A first planar side of the winding base 66b, which is the upper side shown in Fig. 10, may face another planar side (or the lower planar side shown in Fig. 10) of the first permanent magnet 65a with a first gap or air gap 70a in between. The protrusions 66c may extend from the winding base 66b in a direction parallel to an axis of the rotor shaft 61. And the protrusions 66c may be spaced apart in a circumferential direction, as illustrated in Fig. 11. Referring to Fig. 10, at least a portion of one or more of the protrusions 66c extending outwardly from the first planar side (or the upper planar side shown in Fig. 10) of the winding base 66b may face the outer rim of the first magnetic ring 64a with a second gap or air gap 60a in between.

Referring to Figs. 9 and 10, in addition to the first permanent magnet 65a and the first magnetic ring 64a, the rotor assembly may further include a second permanent magnet 65b and a second magnetic ring 64b. In one example, the second permanent magnet 65b is coupled to the second magnetic ring 64b, or, in particular, a planar side of the second magnetic ring 64b. Furthermore, the second magnetic ring 64b is also coupled to the rotor shaft 61. Similar to the first permanent magnet 65a, the second permanent magnet 65b has a second ring shape or a portion of the ring shape and generates a second magnetic field. In this example, the second permanent magnet 65b may be coaxial to the first permanent magnet 65a and may be of substantial the same size and shape as the first permanent magnet 65a. Accordingly, a section of the second permanent magnet 65b, a section of the winding base 66b, one of the magnetic protrusions 66c, and a section of the second magnetic ring 64b may provide a separate pseudo path for magnetic field lines, which may follow the direction shown by the lower arrowed loop 69b shown in Fig. 10. As an example, an interaction between a current from the coils 66a and the second magnetic field generated by the second permanent magnet 65b may generate a torque to drive the rotor assembly, thereby rotating it relatively to the stator assembly.

Referring to Fig. 10, the winding base 66b is located between the first permanent magnet 65a and the second permanent magnet 65b, and the second planar side (or the lower planar side shown in Fig. 10) of the winding base 66b may face the a planar side (or the upper planar side shown in Fig. 10) of the second permanent magnet 85b with a third gap or air gap 70b in between. As illustrated in Fig. 10, the protrusions 66c may extend bi-directionally from the winding base 66b in parallel with the axial direction of the rotor shaft 61. And at least a portion of one protrusions extending outwardly from the second planar side (or the lower planar side shown in Fig. 10) of the winding base 66b may face the outer rim of the second magnetic ring 64b with a fourth gap or air gap 60b in between.

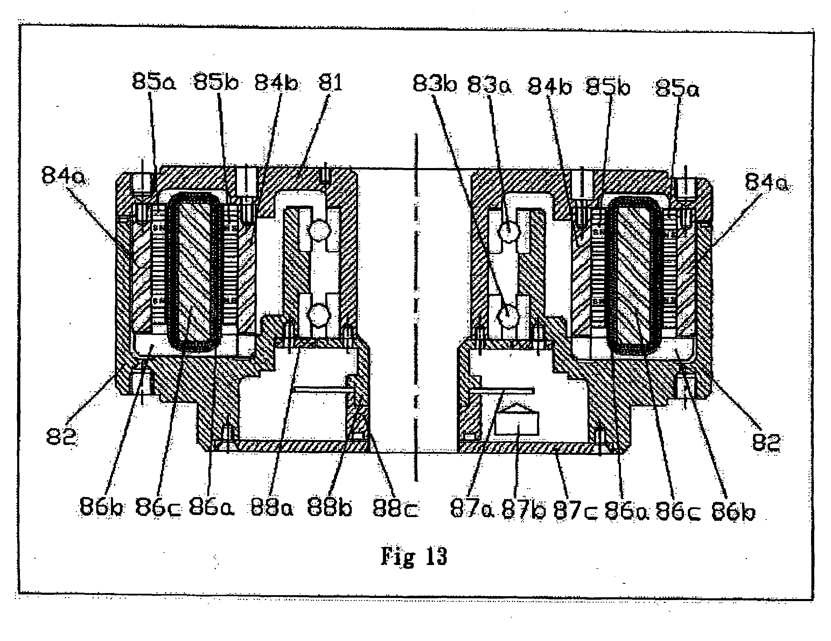

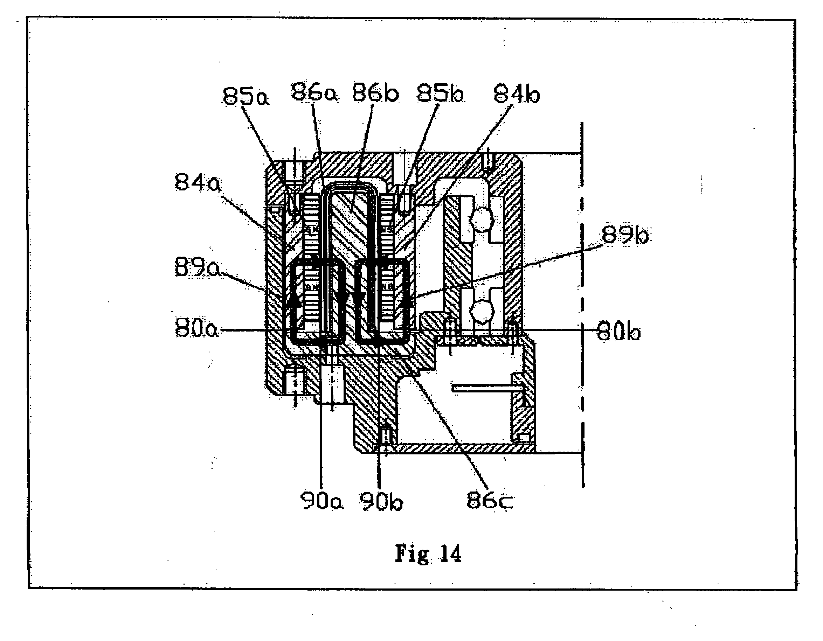

The examples illustrated in Figs. 1-4 may be modified to fit different design needs. For example. Figs. 13-16 illustrate an example of a varied design, which may have one or two sets of permanent magnet and magnetic ring for the rotor assembly. Fig. 13 illustrates a cross-sectional view of the brushless DC motor. Fig. 14 illustrates a cross-sectional view of a portion of the motor illustrated in Fig. 13. Referring to Figs. 13 and 14, a brushless DC motor may include several elements, such as a rotor assembly and a stator assembly. The rotor assembly may include a first permanent magnet 85a, a rotor shaft 81 coupled to the first permanent magnet 85a, and a first magnetic ring 84a also coupled to the first permanent magnet 85a. The first permanent magnet 85a may have a ring shape and generate a first magnetic field. Depending on the design, the rotor assembly may also include one or more of a hub shaft as part of rotor shaft 81, bearings 83a and 83b, bearing washer 88b, and bearing clamp 88c, each of which may be coupled or rotatably coupled to one or more parts of the rotor assembly.

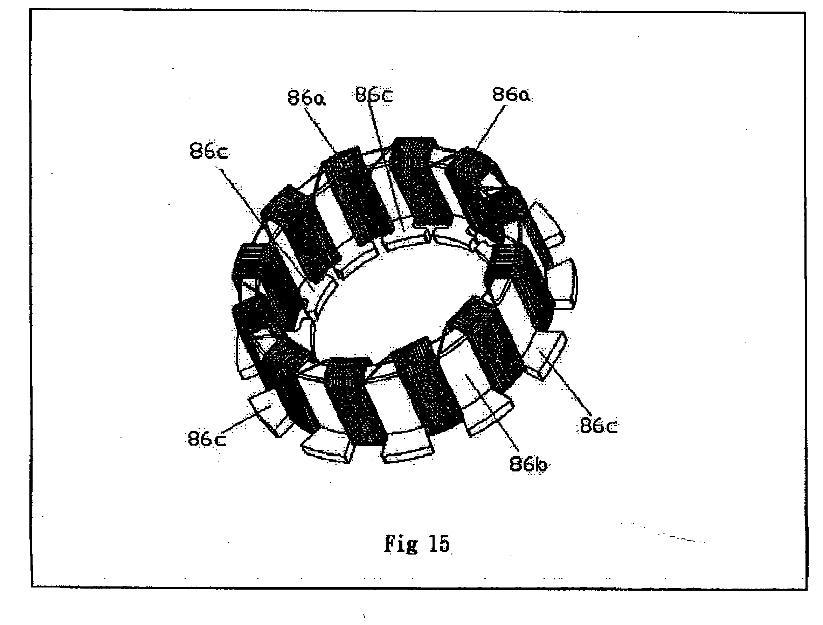

Referring to Figs. 13 and 14, the stator assembly is rotatably coupled with the rotor assembly, thereby allowing a relative movement or rotation between the two. Fig. 15 illustrates a perspective view of the rotor assembly illustrated in Figs. 13 and 14. Referring to Figs. 14 and 15, the stator assembly may include a magnetic, ring-shaped or partially ring-shaped winding base 86b, coils 86a winding upon the winding base 86b, and a number of magnetic protrusions 86c extending from the winding base 86b toward the first magnetic ring 84a. Each of the protrusions 86c may be spaced apart from other protrusions. Depending on the design, the stator assembly may have a motor base, including 87c, coupled or rotatably coupled to one or more parts of the stator assembly. In one application, encoder or encoding components 87a and/or 87b may be included for providing location, rotation, or other feedback information to a motor control circuit or motor status sensing circuit.

Referring to Fig. 14, in some examples, a section of the first permanent magnet 85a, a section of the winding base 86b, one of the magnetic protrusions 86c, and a section of the first magnetic ring 84a may provide a pseudo path for magnetic field lines, which may follow the direction shown by the left arrowed loop 89a shown in Fig. 14. As an example, an interaction between a current from the coils 86a and the first magnetic field generated by the first permanent magnet 85a may generate a torque to drive the rotor assembly, thereby rotating it relatively to the stator assembly.

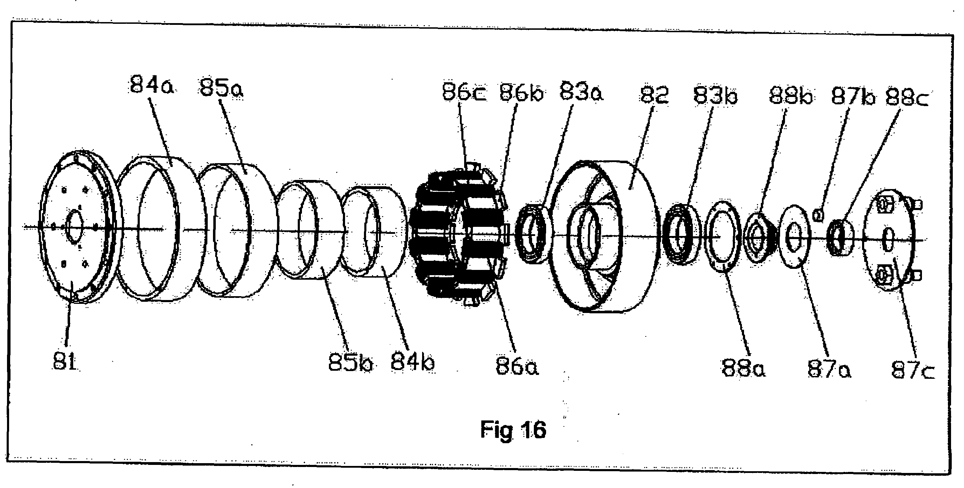

Fig. 16 illustrates a perspective view of some exemplary components of a brushless DC motor in one example. Referring to Figs. 15 and 16, in one example, the coils may be connected in series and be wound spirally along the ring-shaped or partially ring-shaped winding base 86b. As an example, the coils may have a plurality of groups, such as a dozen groups shown in the illustrated example, which may be spaced apart in a circumferential direction with each group located between two neighboring protrusions 86c. As illustrated, the stator assembly may have 12 protrusions intersecting with, or protruding from, the spaces between neighboring coil groups. In one example, the first magnetic ring 85a, the protrusions 86c, and the winding base 86b each may include a material such as a ferrite, a ferromagnetic, a soft magnetic material, or a combination of two or more of them, to provide certain magnetic characteristics.

Referring to Fig. 13, the stator assembly may be rotatably coupled to the rotor assembly with one or more gaps or air gaps between the two. For example, Fig. 14 illustrates a first gap or air gap 90a, which may have a ring shape, between the permanent magnet 85a (or at least a section of it) and the winding base 86b (or at least a section of it). Fig. 14 also illustrates a second gap or air gap 80a between each of the protrusions 86c and a nearby section of the first magnetic ring 84a, which can be a section substantially corresponding to where the protrusion is. In one example, to provide the looped pseudo path for magnetic field line as indicated in Fig. 14, the polarity of the magnetic field generated by the first permanent magnet 85a may extend substantially in a radial direction of the ring-shaped permanent magnet 85a.

In some examples, the physical structure of some parts of the rotor assembly, the stator assembly, or both may be designed in various manners depending on the application of a motor. As one example, referring to Figs. 13 and 14, the first permanent magnet 85a may be coupled to the inner rim of the first magnetic ring 84a. Also, the outer rim of the winding base 86b may face the inner rim of the first permanent magnet 85a with a gap or an air gap in between. Furthermore, as illustrated in Fig. 15, the protrusions 86c may extend from the winding base 86b in a radial direction, and the protrusions 86c may be spaced apart in a circumferential direction. Referring to Figs. 13 and 14, at least a portion of one of the protrusions 86c may face one planar side of the first magnetic ring 84a with a gap or an air gap in between.

Referring to Figs. 13 and 14, in addition to the first permanent magnet 85a and the first magnetic ring 84a, the rotor assembly may further include a second permanent magnet 85b and a second magnetic ring 84b. In one example, the second permanent magnet 85b is coupled to the second magnetic ring 84b, or, in particular, the outer rim of the second magnetic ring 84b. Furthermore, the second magnetic ring 84b is also coupled to the rotor shaft 81. Similar to the first permanent magnet 85a, the second permanent magnet 85b has a second ring shape and generates a second magnetic field. In this example, the second magnetic ring 86b is smaller than the first magnetic ring 85a and is coaxial to the first magnetic ring 85a. Accordingly, a section of the second permanent magnet 85b, a section of the winding base 86b, one of the magnetic protrusions 86c, and a section of the second magnetic ring 84b may provide a separate pseudo path for magnetic field lines, which may follow the direction shown by the right arrowed loop 89b shown in Fig. 14. As an example, an interaction between a current from the coils 86a and the second magnetic field generated by the second permanent magnet 85b may generate additional torque to drive the rotor assembly, thereby rotating it relatively to the stator assembly.

Referring to Fig. 14, the winding base 86b is located between the first permanent magnet 85a and the second permanent magnet 85b, and the inner rim of the winding base 86b may face the outer rim of the second permanent magnet 85b with a third gap or air gap 90b in between. To provide additional torque for driving the motor, the magnetic protrusions 86c may extend from the winding base 86b in both radial and counter-radial directions. In one example, at least a portion of magnetic protrusions 86c faces a planar side of the second magnetic ring 84b with a fourth gap or air gap 80b in between.

As illustrated above, examples of brushless DC motors are provided. Various systems may incorporate a brushless DC motor for many various applications. For example, a brushless DC motor may be included in a computer, a computer peripheral device, a storage device, a servo system, a vibration mechanism, and other systems. For example, a hard drive, an optical disc drive, a magnetic drive, a tape drive, a printer, a scanner, a serve system, a servo control device, a mobile phone, a portable device, such as a communication or a gaming device, or a copier may incorporate a motor illustrated above to drive any of it moving components. Additionally, a brushless DC motor may be used in a digital camera, a video camera, or other image capture systems that uses a motor to drive lens or other components. For the applications in various systems, a system may include a power supply module coupled to the stator assembly of a brushless DC motor, and the power supply module may be adapted to provide a DC voltage to the motor. Depending on the torque, rotational speed, and operational characteristics required from the motor by a system, the power supply module or circuitry may be designed differently.

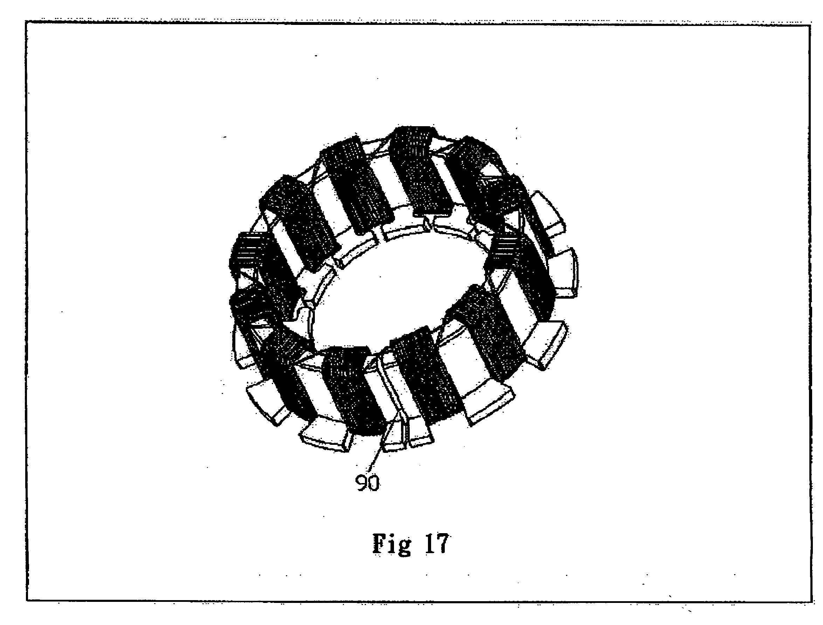

Fig. 17 illustrates a perspective view of an alternative, exemplary configuration of a winding base 90 with an opening in the ring-shaped base in one example consistent with the invention. As illustrated above, a winding base for a brushless DC motor may be provided with a ring shape, which can be a full ring or a portion of a ring. In other words, a winding base may be provided with an opening for ease of winding or for other design or manufacturing considerations, such as the exemplary winding shown in Fig. 17. Similarly, one or more components of a rotor assembly or a stator assembly may be provided in a ring shape, which can be a full ring or a portion of a ring for various design or manufacturing considerations. And the shape and the span of a partial ring may vary depending on various design factors.

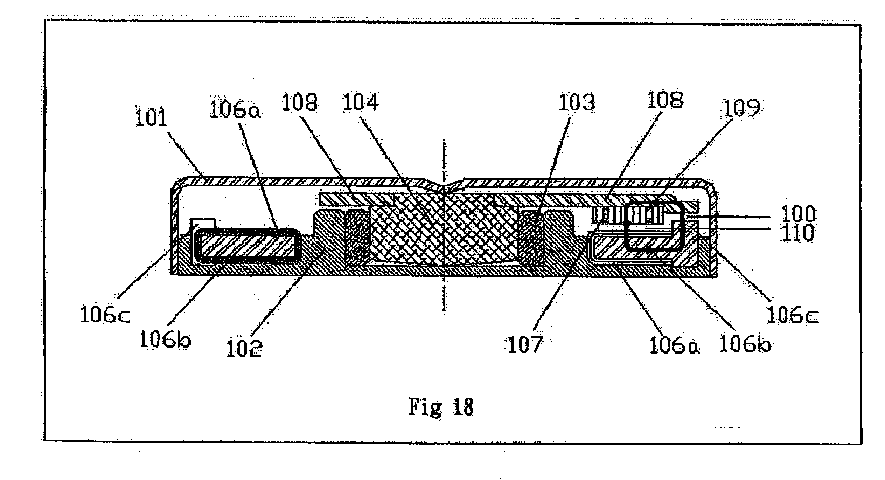

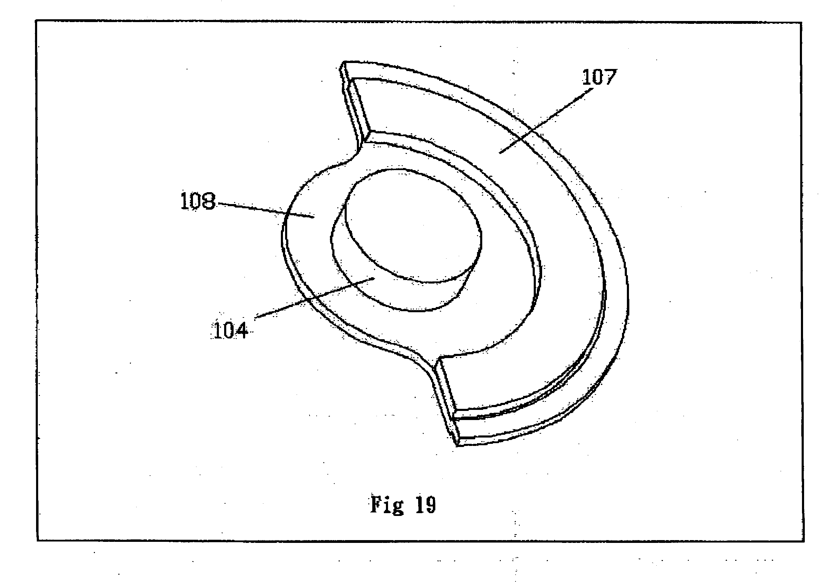

By varying the shape or the span of one or more components of a rotor assembly or a stator assembly, a motor may be designed to cause vibrations while the rotor assembly rotates or to drive the vibration of other devices associated with the motor. Fig. 18 illustrates a cross-sectional view of an example of a vibration motor, which was illustrated with a slim-type design. In one example, one or more components of a rotor assembly may be designed to have the shape of a portion of a ring. Fig. 19 illustrates an example of a rotor assembly having a partially ring shape, which may be used in the motor illustrated in Fig. 18. Referring to Fig. 19, the rotor assembly may include a rotor shaft 104, a permanent magnet 107, and a magnetic ring 108.

Referring to Figs. 18, a brushless DC motor may include several elements, such as a rotor assembly and a stator assembly. The rotor assembly may include a first permanent magnet 107, a rotor shaft 104 coaxial with and coupled to the first permanent magnet 107, and a first magnetic ring 108 also coaxial with and coupled to the first permanent magnet 27. The first permanent magnet 107 may have a ring shape or a portion of it and generate a first magnetic field. Depending on the design, the rotor assembly may also include rotor hub coupled to one or more parts of the rotor assembly. The stator assembly is rotatably coupled with the rotor assembly, thereby allowing a relative movement or rotation between the two.

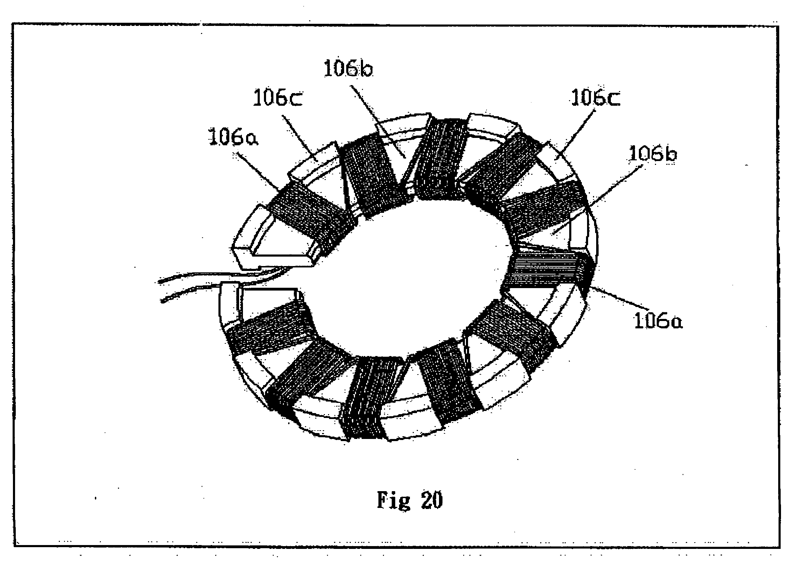

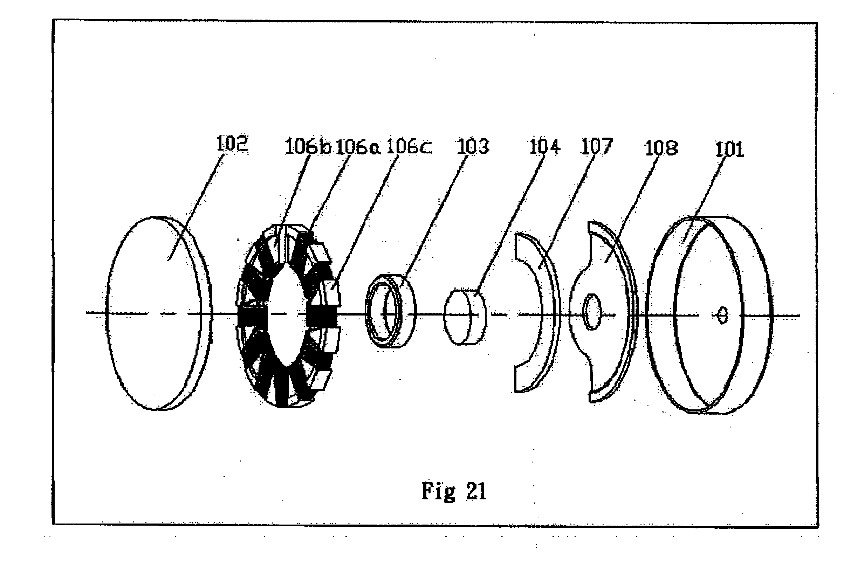

Fig. 20 illustrates a perspective view of a stator assembly that may be used in the motor illustrated in Fig. 18. Fig. 21 illustrates a perspective view of some exemplary components of the motor illustrated in Fig. 18. Referring to Figs. 18, 20, and 21, the stator assembly may include a magnetic, ring-shaped winding base 106b, coils 106a winding upon the winding base, and a number of magnetic protrusions 106c extending from the winding base 106b toward the first magnet ring 108. Each of the protrusions 106c may be spaced apart from other protrusions. Referring to Figs. 18 and 21, depending on the design, the stator assembly may have one or more of an outer cover 101, a base 102, a cylindrical sleeve 103, and a sealing cap, each of which may be coupled to or rotatably coupled to one or more parts of the stator assembly.

Referring to Fig. 18, in some examples, a section of the first permanent magnet 107, a section of the winding base 106b, one of the magnetic protrusions 106c, and a section of the first magnetic ring 108 may provide a "pseudo" path for magnetic field lines, which may follow the direction shown by the arrowed loop 109 shown in Fig. 18. Additional pseudo paths for magnetic field may be formed similarly for each of the protrusions 106c. Generally, a path for magnetic fields lines may be regarded as "pseudo" because those lines are imaginary and are provided to represent or visualize the direction or flow of magnetic field. In one example, the interaction between a current from the coils 106a and the first magnetic field generated by the first permanent magnet 107 may generate a torque to drive the rotor assembly, thereby rotating it relatively to the stator assembly, and, in some cases, causing vibrations of the motor.

Referring to Figs. 20 and 21, in one example, the coils may be connected in series and be wound spirally along the ring-shaped or partially ring-shaped winding base 106b. In other words, the ring-shaped base 106b may be provided with an opening for ease of winding for other design or Manufacturing considerations. As an example, the coils may have a plurality of groups, such as 12 coil groups shown in the illustrated example, which may be spaced apart in a circumferential direction with each coil group being located between two neighboring protrusions 106c. As illustrated, the stator assembly may have 12 protrusions intersecting with, or protruding from, the spaces between neighboring coil groups. In one example, the first magnetic ring 108, the protrusions 106c, and the winding base 106b each may include a material such as a ferrite, a ferromagnetic, a soft magnetic material, or a combination of two or more of them, to provide certain magnetic characteristics.

Referring to Fig. 18, the stator assembly may be rotatably coupled to the rotor assembly with one or more gaps or air gaps between the two. For example, Fig. 18 illustrates a first gap or air gap 110, which may have a ring-shape, between the first permanent magnet 107 (or at least a section of it) and the winding base 106b (or at least a section of it). Fig. 18, also illustrates a second gap or air gap 110 between each of the protrusions 106c and a nearby section of the first magnetic ring 108, which can be a section substantially corresponding to where the protrusion is. In one example, to provide the looped pseudo path for magnetic field line as indicated in Fig. 18, the polarity of the magnetic field generated by the first permanent magnet 107 may extend substantially in a radial direction of the ring-shaped permanent magnet 107.

In some examples, the physical structure of some parts of the rotor assembly, the stator assembly, or both may be designed in various manners depending on the application of a motor. As an example, referring to Figs. 18, the first permanent magnet 107 may be coupled to a planar side the first magnetic ring 109. A first planar side of the winding base 106b, which is the upper side shown in Fig. 18, may face another planar side (or the lower planar side shown in Fig. 18) of the first permanent magnet 107 with a first gap or air gap 100 in between. The protrusions 106c may extend from the winding base 106b in a direction parallel to an axis of the rotor shaft 104. And the protrusions 106c may be spaced apart in a circumferential direction, as illustrated in Fig. 21. Referring to Fig. 18, at least a portion of one or more of the protrusions 106c extending outwardly from the first planar side (or the upper planar side shown in Fig. 18) of the winding base 106b may face the outer rim of the first magnetic ring 108 with a second gap or air gap 100 in between.

Although the examples above describe a motor or an electro-magnetic device for converting electrical energy to mechanical energy, the same or similar configuration may be used as an electro-magnetic device for converting mechanical energy to electrical energy. In other words, the rotor assembly may be driven by other devices, such as a turbine, a micro-turbine, and any other system and the relative rotational movements between the rotor assembly and the stator assembly may generate an electrical current through the coils illustrated above.

Various designs illustrated above for a brushless DC motor may be used with or without modifications to fit various system needs. Defending on its design and applications, a brushless DC motor using the design of the invention may avoid or reduce the effect of one or more disadvantages associated with traditional motors, such as static, noise, wearing of brushes and the receptors, undesirable generation of heat, lack of electrical or mechanical efficiency, limitations on the rotational speed, dead angle in its operation, hysteresis loss, torque ripple, and cogging.

In some examples, the DC motors illustrated may have two or more gaps or air gaps, each of which may be a ring-shaped gap or air gap region. As illustrated in the drawings, the coils may be coil groups in a serial connection, and the coils may be wound upon the surface of a winding base in a generally radial direction. The multiple protrusions may be spread evenly across the ring-shaped or partially ring-shaped winding base to improve stability. Such design allows the motor to be operated without brushes and without requiring change of phase in the electrical current for operating the motor. Therefore, a simpler and cost-effective design and operation may be achieved.

Additionally, each of the permanent magnet illustrated above may be a single-piece, ring-shaped magnet or a combination of multiple magnets to for the ring-shaped magnets as illustrated. And the coils may be formed by a wire with an insulative coating, such as a single-layer or multiple layer coating.

The foregoing disclosure of the examples of the invention has been presented for purposes of illustration and description. They are not intended to be exhaustive or to limit the invention to the precise forms disclosed. Many variations and modifications of the examples described herein can be made. The scope of the invention is to be defined by the claims appended hereto and their equivalents.

Further, in describing representative examples of the invention, the specification may have presented systems or devices consistent with the invention as having specific structures or combinations of components. However, to the extent that a system or device does not rely on the particular structure or combination set forth herein, the system or device should not be limited to the particular structures or combinations described. Other variations and modifications may be possible. Therefore, the particular structures, combinations, or shapes of separate components in the specification should not be construed as limitations on the claims.

## Claims

1. A system comprising a brushless DC motor, **characterised in that** the brushless DC motor comprises:
a rotor assembly comprising:
a first permanent magnet having a first ring shape or a portion of the first ring shape and generating a first magnetic field;
a rotor shaft coaxial with and coupled to the first permanent magnet; and
a first magnetic ring coaxial with and coupled to the first permanent magnet; and
a stator assembly coaxial with and rotatably coupled to the rotor assembly, the stator assembly comprising:
a magnetic, ring-shaped or partially ring-shaped winding base;
coils winding upon the winding base; and
a plurality of magnetic protrusions extending from the winding base toward the first magnet ring, each of the magnetic protrusions being spaced apart from other magnetic protrusions, wherein a section of the first permanent magnet, a section of the winding base, one of the magnetic protrusions, and a section of the first magnetic ring provide a pseudo path for magnetic field lines.

2. The system of claim 1, wherein the pseudo path for magnetic field lines is a looped pseudo path and an interaction between a current from the coils and the first magnetic field generates a torque to drive the rotor assembly.

3. The system of claim 1, wherein the coils are connected in series and are wound spirally along the winding base, the coils having a plurality of groups spaced apart in a circumferential direction and each group being located between two magnetic protrusions of the plurality of magnetic protrusions.

4. The system of claim 1, wherein the first magnetic ring, the plurality of magnetic protrusions, and the winding base each comprises at least one of a ferrite, a ferromagnetic, or a soft magnetic material.

5. The system of claim 1, wherein the stator assembly is rotatably coupled to the rotor assembly with a first gap between the first permanent magnet and the winding base and a second gap between the magnetic protrusions and the first magnetic ring.

6. The system of claim 1 wherein the system further comprises a power supply module coupled to the stator assembly and is adapted to provide a DC voltage to the motor.

7. The system of claim 1, wherein a polarity of the first magnetic field generated by the first permanent magnet extends substantially in one of a radial direction or an axial direction of the first ring shape.

8. The system of claim 1, wherein:
the first permanent magnet is coupled to an inner rim of the first magnetic ring;
an outer rim of the winding base faces an inner rim of the first permanent magnet with a first gap in between;
the plurality of magnetic protrusions extend from the winding base in a radial direction, the plurality of magnetic protrusions being spaced apart in a circumferential direction;
wherein at least a portion of one of the plurality of magnetic protrusions faces a planar side of the first magnetic ring with a second gap in between.

9. The system of claim 8, wherein: the rotor assembly further comprises:
a second magnetic ring coupled to the rotor shaft, the second magnetic ring being smaller than the first magnetic ring and coaxial to the first magnetic ring; and
a second permanent magnet coupled to the second magnetic ring, the second permanent magnet having a second ring shape or a portion of the second ring shape and generating a second magnetic field, the second permanent magnet being coupled to an outer rim of the second magnetic ring;
the winding base is located between the first permanent magnet and the second permanent magnet;
an inner rim of the winding base faces an outer rim of the second permanent magnet with a third gap in between;
the plurality of magnetic protrusions extend from the winding base in both radial and counter-radial directions;
at least a portion of one of the plurality of magnetic protrusions faces a planar side of the second magnetic ring with a fourth gap in between.

10. The system of claim 1, wherein:
the first permanent magnet is coupled to a planar side of the first magnetic ring;
a planar side of the winding base faces a planar side of the first permanent magnet with a first gap in between;
the plurality of magnetic protrusions extend from the winding base in a direction parallel to an axial direction of the rotor shaft, the plurality of magnetic protrusions being spaced apart in a circumferential direction;
wherein at least a tip of one of the plurality of magnetic protrusions faces the planar side of the first magnetic ring with a second gap in between.

11. The system of claim 1, wherein:
the first permanent magnet is coupled to a planar side of the first magnetic ring;
a first planar side of the winding base faces a planar side of the first permanent magnet with a first gap in between;
the plurality of magnetic protrusions extend from the winding base in a direction parallel to an axial direction of the rotor shaft, the plurality protrusions being spaced apart in a circumferential direction;
wherein at least a portion of one of the plurality of magnetic protrusions extending outwardly from the first planar side of the winding base faces the outer rim of the first magnetic ring with a second gap in between.

12. The system of claim 11, wherein:
the rotor assembly further comprises:
a second permanent magnet coupled to the rotor shaft, the second permanent magnet having a second ring shape or a portion of the second ring shape and generating a second magnetic field, the second permanent magnet being coaxial to the first permanent magnet; and
a second magnetic ring coupled to the second permanent magnet, the second magnetic ring being coupled to a planar side of the second permanent magnet;
the winding base is located between the first permanent magnet and the second permanent magnet;
a second planar side of the winding base faces a planar side of the second permanent magnet with a third gap in between;
the plurality of magnetic protrusions extend bi-directionally from the winding base in parallel with the axial direction of the rotor shaft;
wherein at least a portion of one of the plurality of magnetic protrusions extending outwardly from the second planar side of the winding base faces the outer rim of the second magnetic ring with a fourth gap in between.

13. An electro-magnetic device for converting electrical energy to mechanical energy or converting mechanical energy to electrical energy, **characterised in that** it comprises:
a rotor assembly comprising:
a first permanent magnet having a first ring shape and generating a first magnetic field;
a rotor shaft coupled to the first permanent magnet; and
a first magnetic ring coupled to the first permanent magnet; and
a stator assembly rotatably coupled to the rotor assembly, the stator assembly comprising:
a magnetic, ring-shaped or partially ring-shaped winding base;
coils winding upon the winding base; and
a plurality of magnetic protrusions extending from the winding base toward the first magnet ring,
a section of the first permanent magnet, a section of the winding base, one of the magnetic protrusions, and a section of the first magnetic ring provide a pseudo path for magnetic field lines.

14. The electro-magnetic device of claim 13, wherein the coils are connected in series and are wound spirally along the winding base, the coils having a plurality of groups spaced apart in a circumferential direction and each group being located between two magnetic protrusions of the plurality of magnetic protrusions.

15. The electro-magnetic device of claim 13, wherein a polarity of the first magnetic field generated by the first permanent magnet extends substantially in one of a radial direction or an axial direction of the first ring shape.

16. The electro-magnetic device of claim 13, wherein:
the first permanent magnet is coupled to an inner rim of the first magnetic ring;
an outer rim of the winding base faces an inner rim of the first permanent magnet with a first gap in between;
the plurality of magnetic protrusions extend from the winding base in a radial direction, the plurality of magnetic protrusions being spaced apart in a circumferential direction;
wherein at least a portion of one of the plurality of magnetic protrusions faces a planar side of the first magnetic ring with a second gap in between.

17. The electro-magnetic device of claim 16, wherein:
the rotor assembly further comprises:
a second magnetic ring coupled to the rotor shaft, the second magnetic ring being smaller than the first magnetic ring and coaxial to the first magnetic ring; and
a second permanent magnet coupled to the second magnetic ring, the second permanent magnet having a second ring shape or a portion of the second ring shape and generating a second magnetic field, the second permanent magnet being coupled to an outer rim of the second magnetic ring;
the winding base is located between the first permanent magnet and the second permanent magnet;
an inner rim of the winding base faces an outer rim of the second permanent magnet with a third gap in between;
the plurality of magnetic protrusions extend from the winding base in both radial and counter-radial directions;
at least a portion of one of the plurality of magnetic protrusions faces a planar side of the second magnetic ring with a fourth gap in between.

18. The electro-magnetic device of claim 13, wherein:
the first permanent magnet is coupled to a planar side of the first magnetic ring;
a planar side of the winding base faces a planar side of the first permanent magnet with a first gap in between;
the plurality of magnetic protrusions extend from the winding base in a direction parallel to an axis of the rotor shaft, the plurality of magnetic protrusions being spaced apart in a circumferential direction;
wherein at least a portion of one of the plurality of magnetic protrusions faces the planar side of the first magnetic ring with a second gap in between.

19. The electro-magnetic device of claim 13, wherein:
the first permanent magnet is coupled to a planar side of the first magnetic ring;
a first planar side of the winding base faces a planar side of the first permanent magnet with a first gap in between;
the plurality of magnetic protrusions extend from the winding base in a direction parallel to an axial direction of the rotor shaft, the plurality protrusions being spaced apart in a circumferential direction;
wherein at least a portion of one of the plurality of magnetic protrusions extending outwardly from the first planar side of the winding base faces the outer rim of the first magnetic ring with a second gap in between.

20. The electro-magnetic device of claim 19, wherein:
the rotor assembly further comprises:
a second permanent magnet coupled to the rotor shaft, the second permanent magnet having a second ring shape or a portion of the second ring shape and generating a second magnetic field, the second permanent magnet being coaxial to the first permanent magnet; and
a second magnetic ring coupled to the second permanent magnet, the second magnetic ring is coupled to a planar side of the second permanent magnet; and wherein:
the winding base is located between the first permanent magnet and the second permanent magnet;
a second planar side of the winding base faces a planar side of the second permanent magnet with a third gap in between;
the plurality of magnetic protrusions extend bi-directionally from the winding base in parallel with the axial direction of the rotor shaft;
wherein at least a portion of one of the plurality of magnetic protrusions extending outwardly from the second planar side of the winding base faces the outer rim of the second magnetic ring with a fourth gap in between.

21. A computer peripheral device having a brushless DC motor comprising an electro-magnetic device according to one of the claims 13 to 20.

22. The computer peripheral device of claim 21, wherein the computer peripheral device comprise at least one of a hard drive, an optical drive, a magnetic drive, a tape drive, a printer, a scanner, a copying machine, a camera, and a video camera.

## Amended claims

### Amended claims in accordance with Rule 86(2) EPC.

**1.** An electro-magnetic device for converting electrical energy to mechanical energy or converting mechanical energy to electrical energy, comprising a rotor assembly and a stator assembly rotatably coupled to the rotor assembly, **characterised in that**:
the rotor assembly comprises:
a first permanent magnet (27, 47, 65a, 65b, 85a, 85b, 107) having a first ring shape or a portion of a first ring shape and generating a first magnetic field;
a rotor shaft (24, 44, 61, 81, 104) coupled to the first permanent magnet; and
a first magnetic ring (28, 48, 64a, 84a, 108) coupled to the first permanent magnet; and
the stator assembly comprises:
a magnetic, ring-shaped or partially ring-shaped winding base (26b, 46b, 66b, 86b, 90, 106b) ; coils (26a, 46a, 66a, 86a, 106a) winding upon the winding base; and
a plurality of magnetic protrusions (26c, 46c, 66c, 86c, 106c) extending from the winding base toward the first magnet ring, and
wherein a section of the first permanent magnet, a section of the winding base, one of the magnetic protrusions, and a section of the first magnetic ring provide a path for magnetic field lines.

**2.** The electro-magnetic device of claim 1, wherein the coils are connected in series and are wound spirally along the winding base, the coils having a plurality of groups spaced apart in a circumferential direction and each group being located between two magnetic protrusions of the plurality of magnetic protrusions.

**3.** The electro-magnetic device according to one of the claims 1 or 2, wherein a polarity of the first magnetic field generated by the first permanent magnet extends substantially in one of a radial direction or an axial direction of the first ring shape.

**4.** The electro-magnetic device according to one of the claims 1 to 3, wherein the first magnetic ring, the plurality of magnetic protrusions, and the winding base each comprises at least one of a ferrite, a ferromagnetic, or a soft magnetic material.

**5.** The electro-magnetic device according to one of the claims 1 to 4, wherein the stator assembly is rotatably coupled to the rotor assembly with a first gap between the first permanent magnet and the winding base and a second gap between the magnetic protrusions and the first magnetic ring.

**6.** The electro-magnetic device according to one of the claims 1 to 5, wherein said rotor shaft is coaxial with the first permanent magnet, said first magnetic ring is coaxial with the first permanent magnet; and said stator assembly is coaxial with the rotor assembly, and each of the magnetic protrusions is spaced apart from other magnetic protrusions.

**7.** The electro-magnetic device according to one of the claims 1 to 6, wherein:
the first permanent magnet (27, 85a) is coupled to an inner rim of the first magnetic ring;
an outer rim of the winding base (26b, 86b) faces an inner rim of the first permanent magnet (27, 85a) with a first gap in between;
the plurality of magnetic protrusions (26c, 86c) extend from the winding base in a radial direction, the plurality of magnetic protrusions being spaced apart in a circumferential direction; and
at least a portion of one of the plurality of magnetic protrusions (26c, 86c) faces a planar side of the first magnetic ring (28, 84a) with a second gap in between.

**8.** The electro-magnetic device of claim 7, wherein:
the rotor assembly further comprises:
a second magnetic ring (84b) coupled to the rotor shaft, the second magnetic ring being smaller than the first magnetic ring and coaxial to the first magnetic ring; and
a second permanent magnet (85b) coupled to the second magnetic ring, the second permanent magnet having a second ring shape or a portion of a second ring shape and generating a second magnetic field, the second permanent magnet being coupled to an outer rim of the second magnetic ring (84b);
the winding base (86b) is located between the first permanent magnet (85a) and the second permanent magnet (85b);
an inner rim of the winding base faces an outer rim of the second permanent magnet with a third gap in between;
the plurality of magnetic protrusions (86c) extend from the winding base in both radial and counter-radial directions; and
at least a portion of one of the plurality of magnetic protrusions faces a planar side of the second magnetic ring (84b) with a fourth gap in between.

**9.** The electro-magnetic device according to one of the claims 1 to 6, wherein:
the first permanent magnet (47) is coupled to a planar side of the first magnetic ring (48);
a planar side of the winding base (46b) faces a planar side of the first permanent magnet (47) with a first gap in between;
the plurality of magnetic protrusions (46c) extend from the winding base in a direction parallel to an axis of the rotor shaft, the plurality of magnetic protrusions being spaced apart in a circumferential direction; and
at least a portion of one of the plurality of magnetic protrusions (46c) faces the planar side of the first magnetic ring (48) with a second gap in between.

**10.** The electro-magnetic device according to one of the claims 1 to 6, wherein:
the first permanent magnet (65a, 107) is coupled to a planar side of the first magnetic ring (64a, 108);
a first planar side of the winding base (66b, 106b) faces a planar side of the first permanent magnet (65a, 107) with a first gap in between;
the plurality of magnetic protrusions (66c, 106c) extend from the winding base in a direction parallel to an axial direction of the rotor shaft, the plurality protrusions being spaced apart in a circumferential direction; and
at least a portion of one of the plurality of magnetic protrusions (66c, 106c) extending outwardly from the first planar side of the winding base (66b, 106b) faces the outer rim of the first magnetic ring (64a , 108) with a second gap in between.

**11.** The electro-magnetic device of claim 10, wherein:
the rotor assembly further comprises:
a second permanent magnet (65b) coupled to the rotor shaft, the second permanent magnet having a second ring shape or a portion of a second ring shape and generating a second magnetic field, the second permanent magnet being coaxial to the first permanent magnet (65a) ; and
a second magnetic ring (64b) coupled to the second permanent magnet, the second magnetic ring is coupled to a planar side of the second permanent magnet; and wherein:
the winding base (66b) is located between the first permanent magnet and the second permanent magnet;
a second planar side of the winding base (66b) faces a planar side of the second permanent magnet (65b) with a third gap in between;
the plurality of magnetic protrusions (66c) extend bi-directionally from the winding base in parallel with the axial direction of the rotor shaft; and
at least a portion of one of the plurality of magnetic protrusions extending outwardly from the second planar side of the winding base faces the outer rim of the second magnetic ring (64b) with a fourth gap in between.

**12.** A computer peripheral device comprising an electro-magnetic device according to one of the claims 1 to 11.

**13.** The computer peripheral device of claim 12, wherein the computer peripheral device comprise at least one of a hard drive, an optical drive, a magnetic drive, a tape drive, a printer, a scanner, a copying machine, a camera, and a video camera.

**14.** A system comprising an electro-magnetic device according to one of the claims 1 to 11 used as a brushless DC motor.

**15.** The system of claim 14, wherein the path for magnetic field lines is a looped path and an interaction between a current from the coils and the first magnetic field generates a torque to drive the rotor assembly.

**16.** The system of claim 14, further comprising a power supply module coupled to the stator assembly and is adapted to provide a DC voltage to the motor.
